# EUROPEAN PATENT SPECIFICATION

(11) **EP 0 693 505 B1**
(45) Date of publication and mention of the grant of the patent: **06.05.1999**
(21) Application number: 95110835.6
(22) Date of filing: 11.07.1995
(51) Int. Cl.: C08F 36/04, C08F 4/48, C08C 19/44, C07F 1/02

(54) **Elastomers and products having reduced hysteresis and process for the preparation thereof**
Elastomere und Produkte mit niedriger Hysteresis und Verfahren zu deren Herstellung
Elastomères et produits à basse hystérésis et procédé pour leur préparation

(30) Priority: 18.07.1994 US 276362
(43) Date of publication of application: 24.01.1996
(73) Proprietor: BRIDGESTONE CORPORATION, Tokyo 104-0031 (JP)
(72) Inventor: Hall, James E., Mogadore, Ohio 44260 (US); Lawson, David F., Uniontown, Ohio 44685 (US); Antkowiak, Thomas A., Rittman, Ohio 44270 (US)
(74) Representative: Kraus, Walter, Dr.

(56) References cited:
- US-A- 5 153 159

## Description

### FIELD OF THE INVENTION

This invention relates to an anionic polymerization of diene monomers and comonomers to produce polymer and copolymer elastomers having a heterocyclic tertiary amine group on the initiated end of each polymer chain. More specifically, the present invention relates to the use of an anionic initiator system formed by sequentially reacting diisopropenyl benzene with a heterocyclic secondary amine and then with an organolithium compound to prepare diene polymers and copolymers having reduced hysteresis characteristics.

Articles such as tires, power belts and the like prepared from these polymers or copolymers exhibit increased rebound, decreased rolling resistance and less heat build-up during mechanical stress operation.

### BACKGROUND OF THE INVENTION

It is desirable to produce elastomeric compounds exhibiting reduced hysteresis. Such elastomers, when compounded to form articles such as tires, power belts and the like, show an increase in rebound and a decreased rolling resistance and display less heat build-up when mechanical stresses are applied.

Previous attempts at preparing reduced hysteresis products have included high temperature mixing of the filler-rubber mixtures in the presence of selectively reactive promoters to promote compounding material reinforcement; surface oxidation of the compounding materials; chemical modifications to the terminal end of polymers using tetramethyldiaminobenzophenone (Michler's ketone), tin coupling agents and the like and, surface grafting thereon. All of these approaches have focused upon increased interaction between the elastomer and the compounding materials.

It has also been recognized that carbon black, employed as a reinforcing filler in rubber compounds, should be well dispersed throughout the rubber in order to improve various physical properties. One example of the recognition is provided in published European Patent Application EP 0 316 255 A2 which discloses a process for end capping polydienes by reacting a metal terminated polydiene with a capping agent such as a halogenated nitrile, a heterocyclic aromatic nitrogen containing compound or an alkyl benzoate. Additionally, the application discloses that both ends of the polydiene chains can be capped with polar groups by utilizing functionalized initiators, such as lithium amides.

U.S. Patent No. 5,153,159, to Antkowiak et al, discloses an anionic polymerizing initiator formed by the reaction product of a functionalizing agent selected from the group consisting of substituted aldimines, ketimines and secondary amines, and an organolithium compound. These initiators are used to prepare elastomeric polymers having functional sites at the initiator end of the polymer chain and exhibiting reduced hysteresis, however their use produces undesirable side effects. Since these functionalizing agents initiate polymerization from a nitrogen atom initiation rates are low and termination reactions occur that promote undesirable branching. Furthermore, only batch polymerization techniques can be employed utilizing the nitrogen atom initiated polymerizations since lower reaction temperatures must be maintained to limit side reactions.

### OBJECTS OF THE INVENTION

It is therefore an object of the present invention to provide a process for anionic polymerization using initiators that produce polymer chains having heterocyclic functional end groups at increased initiation rates.

It is another object of the invention to provide functionalized polymers having active terminal groups resulting from carbon-lithium initiation.

It is another object of the present invention to provide a method for preparing functionalized polymers having active terminal groups in semi-batch and continuous commercial processes:

It is another object of the present invention to provide vulcanizable elastomeric compounds having reduced hysteresis at elevated temperatures.

Still another object of the present invention is to provide a method for the preparation of vulcanizable elastomeric compounds having reduced hysteresis.

It is still another object of the present invention to provide an improved pneumatic tire having decreased rolling resistance.

These and other objects together with the advantages thereof over the existing art, which shall become apparent from the specification which follows, are accomplished by the invention as hereinafter described and claimed.

### SUMMARY OF THE INVENTION

The present invention relates to a method of preparing functionalized polymers by the steps of forming a solution of one or more anionically polymerizable monomers in a solvent and, initiating the polymerization of the monomers with an initiator in the form of a reaction product of: (1) an organolithium compound and (2) a precursor functionalizing agent formed by the reaction of a heterocyclic secondary amine and diisopropenyl benzene (DIPB), wherein a functional group derived from the reaction product is incorporated onto the polymer chain at the initiator end and the lithium atom from the organolithium compound is carried at the other end of the polymer prior to quenching. The process of the present invention produces functionalized polymers having a polymer chain carrying a functional group X at the initiator end, wherein the functional group X is derived from the reaction product X-Li of an organolithium compound and a precursor functionalizing agent, the precursor functionalizing agent being formed by pre-reacting diisopropenyl benzene (DIPB) and a heterocyclic ring containing compound having a nitrogen atom of a secondary amine as a ring atom. The polymer chain of the functionalized polymer has a lithium atom from the organolithium compound carried at the other or living end of the polymer chain prior to quenching.

According to the present invention vulcanizable elastomeric polymers having reduced hysteresis properties are produced. The elastomeric polymer has chains carrying the functional group X at the initiator end, wherein X-Li is the reaction product of an organolithium compound and a precursor functionalizing agent formed by the reaction of a heterocyclic ring containing a nitrogen atom in the ring from a secondary amine and DIPB; and the lithium atom from the reaction product attaches on the living end of the polymer and is carried at the other end of the polymer chain prior to quenching. The elastomeric polymer is additionally blended with from about 5 to 80 parts by weight of carbon black, per 100 parts of the polymer.

An improved tire tread, sub-tread, body ply, sidewall and other parts of the tire, singly or in combinations, having decreased rolling resistance is produced from rubber stocks containing the vulcanizable elastomeric composition produced according to the present invention and from about 5 to 80 parts by weight of carbon black, per 100 parts of the polymer.

### DETAILED DESCRIPTION OF THE INVENTION

As will become apparent from the description which follows, the present invention provides a novel initiator for anionic polymerization of diene homopolymer and copolymer elastomers. Polymers prepared with these initiators contain a heterocyclic ring containing a tertiary amine as a terminal group. The vulcanizable elastomeric compounds and articles prepared from these compounds contain functionally terminated polymers exhibiting useful properties, particularly exhibiting reduced hysteresis. Hysteresis is generally known as the failure of a property that has been changed by an external agent to return to its original value when the cause of the change is removed. When compounded to make products such as tires, power belts and the like, these polymeric products exhibit increased rebound, decreased rolling resistance and less heat build-up during periods of applied mechanical stress.

The initiators, according to the present invention, are anionic and are formed by the reaction of (1) an organolithium compound and (2) a precursor functionalizing agent that is formed by reacting a heterocyclic ring containing secondary amine and diisopropenyl benzene (DIPB). The organolithium compound has the general formula RLi where R is selected from the group consisting of alkyls, cycloalkyls, alkenyls, alkynyls, aryls and aralkyls having from 1 to about 20 carbon atoms and short chain length low molecular weight polymers from diolefin and vinyl aryl monomers having up to about 25 units. Typical alkyls include n-butyl, s-butyl, methyl, ethyl, isopropyl and the like. The cycloalkyls include cyclohexyl, cyclopentyl and the like. The alkenyls include allyl, vinyl and the like. The aryl and aralkyl groups include phenyl, benzyl, oligo(styryl) and the like. Exemplary short chain length polymers include the oligo(butadienyls), oligo(isoprenyls), oligo(styryls) and the like.

In the production of the precursor functionalizing agent, the heterocyclic ring containing secondary amine can be any heterocyclic compound containing only one secondary amine group in the ring with the proviso that the heterocyclic compound can contain no substituents that are reactive with lithium or DIPB other than the secondary amine. Representative heterocyclic compounds useful in the present invention have the formula (I): 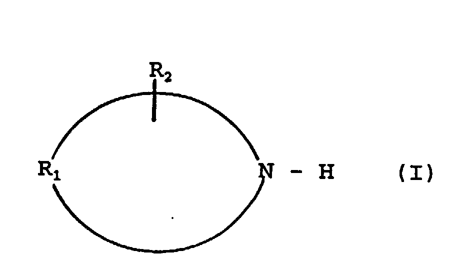 wherein the R₁-NH ring of formula (I) represents any heterocyclic ring compound containing a nitrogen atom of a secondary amine as a ring atom and the heterocyclic ring is free of substituents or unsubstituted ring atoms that are reactive with lithium or alkylene groups. The heterocyclic compounds of formula (I) include but are not limited to: morpholine, thiomorpholine, N-(lower alkyl)-piperazine, N-aryl-piperazine, 1-(2-pyridyl) piperazine, pyrrole, 3-pyrroline, pyrazole, imidazole, imidazoline, indole, indoline, purine and azacycloalkanes. R₁ is preferably -(CH₂)₂-O-(CH₂)₂-;-(CH₂)₂-S-(CH₂)₂-; -(CH₂)₂-NR₂-(CH₂)₂-; or -(CH₂)ₚ- wherein p is an integer from 3 to about 20, preferably 4 to 12. Preferably the R₁ group is formed from methylene groups bonding with the nitrogen atom to form an azacycloalkane heterocyclic ring having a total of 4 to 21 ring atoms, preferably 5 to 13 ring atoms. The heterocyclic ring compounds of formula (I) can be optionally substituted with one or more, preferably one to four substituents R₂ that are non-reactive with lithium or DIPB including but not limited to: alkyl groups and cycloalkyl groups such as methyl, ethyl, propyl, butyl, octyl, cyclohexyl and the like or aryl groups, alkoxy groups, alkyoxyalkyl groups, arylalkyl groups and the like. Exemplary azacycloalkanes are HN(CH₂)_{5,} namely, piperidine; HN(CH₂)_{4,} namely, pyrrolidine; HN(CH₂)_{6,} namely, hexamethyleneimine; and HN(CH₂)₁₂, namely, dodecamethyleneimine. Other preferred heterocyclic secondary amines include morpholine and N-methyl-piperazine.

These heterocyclic secondary amines are reacted with diisopropenyl benzene (DIPB) represented by the formula (II): 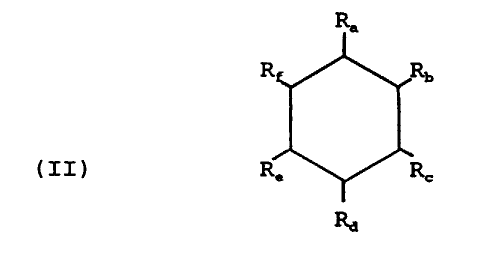 wherein two of the Rₐ, R_{b}, R_{c}, R_{d}, Rₑ and R_{f} radicals are isopropenyl radicals and each of the remaining Rₐ - R_{f} radicals are independently hydrogen or an alkyl or cycloalkyl radical containing 1 to 6 carbon atoms.

The reaction product of DIPB with a secondary amine results in the formation of a precursor functionalizing agent containing a tertiary amine having the structure (III):

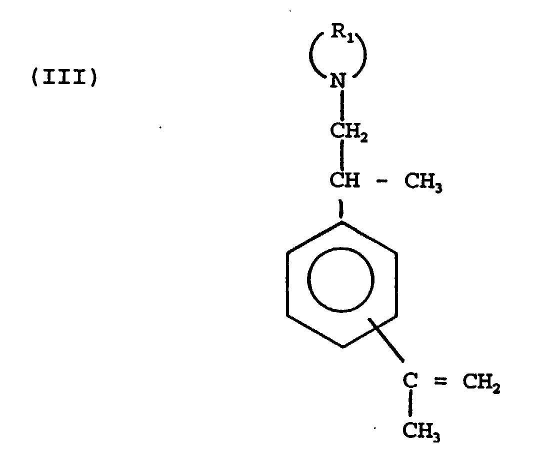

Preferably the DIPB is reacted with the heterocyclic secondary amine in, at least, a 1:1 ratio, so that a second pendent isopropenyl group on the DIPB remains unreacted for subsequent reaction with the organolithium compound. The formation of the precursor functionalizing agent is preferably conducted in an aprotic solvent such as hexane if it is to be used without further purification. Alternatively the precursor functionalizing agent must be purified before further use.

The precursor functionalizing agent is formed by: (1) reacting a heterocyclic ring containing secondary amine (formula I) and diisopropenyl benzene (formula II), and (2) subsequently reacting the precursor functionalizing agent (formula III) formed in step (1) with RLi to form a funtionalizing agent, X-Li, as displayed in formula (IV): 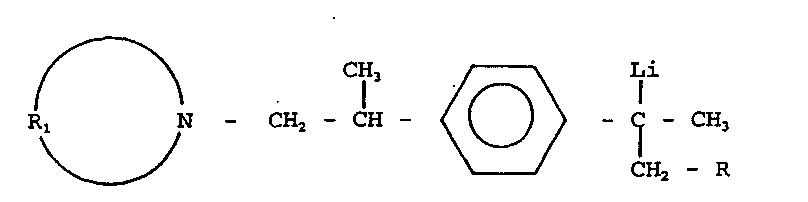 and wherein R have been previously defined and the R₁-N heterocyclic radical is the radical remaining upon the removal of the secondary amino hydrogen (R₁-NH) from the heterocyclic ring compound of formula (I).

The initiators or functionalizing agents of the present invention are used to polymerize monomers into "living polymers". The general formula of a "living polymer" containing a functionalizing group X of the functionalizing agent X-Li is displayed in formula (V):

(V) X ∼ polymer ∼ Li

wherein the polymer is any of the foregoing diene homopolymers, monovinyl aromatic homopolymers, diene/monovinyl aromatic random copolymers and block copolymers and X is the radical or functionalizing group remaining from the functionalizing agent after the lithium atom has initiated polymerization of monomers and has been separated from the functionalizing agent and removed and transported along the polymer chain. The lithium moves down the growing chain as polymerization continues. It should be apparent that the lithium atom from the reaction product X is carried by the other end of the growing polymer chain as depicted hereinabove, until the reaction is quenched.

The initiator, also called the functionalizing agent, is anionic and according to the present invention can be produced by preparing a solution of the precursor functionalizing agent in an anhydrous, aprotic solvent, such as hexane. To this solution is then added the organolithium catalyst (RLi) in the same or a similar solvent. The precursor functionalizing agent and the RLi are allowed to react for an appropriate period of time, e.g. 24 hours at 25° C., or 20 minutes at 50° C., after which time the catalyst is ready for use. It is not necessary to remove the solvent inasmuch as the anionic polymerization is conducted in the same or a compatible solvent. Amounts of the two reactants range from about 0.2 to 3.0 mmoles of precursor functionalizing agent to 1.0 mmole of organolithium catalyst, with equimolar parts being preferred. It is to be appreciated by one skilled in the art that various reaction temperatures and times may be useful and are within the scope of the present invention.

The amount of initiator or functionalizing agent to be used in the polymerization process depends upon the type of polymer desired. An effective initiator level is normally in the range of about 0.25 to 100, preferably 0.50 to 2.0 milliequivalents of effective lithium per 100 grams of monomer charged to the polymerization system. Effective lithium is the amount of lithium able to initiate and propagate polymer chains after impurities such as water have been reacted.

As stated above, the initiator acts as a functionalizing agent and is employed to initiate and prepare any anionically polymerizable polymer, such as polydienes e.g. polybutadiene, polyisoprene and the like, and copolymers thereof with monovinyl aromatics such as styrene, alpha-methylstyrene and the like, or trienes such as myrcene, and other polymers that are known to be polymerizable by anionic organolithium initiators, e.g. polyethylene, poly(vinyl aromatic hydrocarbons) such as polystyrene, and the like. Thus, the elastomers include diene homopolymers and copolymers thereof with monovinyl aromatic polymers. Exemplary diene homopolymers are those prepared from diolefin monomers having from 4 to about 12 carbon atoms. Exemplary vinyl aromatic polymers are those prepared from monomers having from 8 to about 20 carbon atoms. Preferred polymers are elastomers including diene homopolymers such as polybutadiene and polyisoprene and copolymers such as styrene butadiene rubber (SBR). Polymers and copolymers can comprise from about 100 to 30 percent by weight of diene units and from about 0 to 70 percent by weight of monovinyl aromatic hydrocarbon or triene units, totalling 100 percent. The polymers and copolymers of the present invention may have 1,2-microstructure contents ranging from about 8 to about 100 percent, with the preferred polymers or copolymers having 1,2-microstructure contents of from about 10 to 70 percent, based upon the diene content.

The copolymers are preferably random copolymers which result from simultaneous copolymerization of the monomers forming polymers with random distrubution of A and B monomers, as is known in the art. The block copolymers, e.g. poly (b-B-b-A-b-B), result from the separate polymerization of the monomers forming B-A-B polymers as is known in the art. Such block copolymers include poly(styrene-butadiene-styrene) are thermoplastic elastomers.

Polymerization is usually conducted in a conventional solvent for anionic polymerizations such as hexane, cyclohexane, benzene, tetrahydrofuran and the like. Techniques for polymerization such as batch, semi-batch and continuous polymerization may be employed. The novel initiators of the present invention are particularly useful for semi-batch and continuous polymerizations of butadiene, isoprene, and styrene as prior techniques using lithium amides or initiators having initiation beginning from a nitrogen atom have generally resulted in polymerizations that have self-terminated before all the monomers have polymerized.

In order to promote randomization in copolymerization and to increase vinyl content, a modifier may optionally be added to the polymerization ingredients. Amounts range between 0 to 90 or more equivalents per equivalent of lithium. The amount depends upon the type of modifier and the amount of vinyl desired, the level of styrene employed and the temperature of the polymerizations, as well as the precursor functionalizing agent selected to form the initiator.

Compounds useful as modifiers are organic and include those having an oxygen or nitrogen hetero-atom and a non-bonded pair of electrons. Examples include dialkyl ethers of mono and oligo alkylene glycols; "crown" ethers; tertiary amines such as tetramethylethylene diamine (TMEDA); tetrahydrofuran (THF), THF oligomers such as linear and cyclic oligomeric oxolanyl alkanes as described in U.S Patent No. 4,429,091 and the like.

Polymerization is begun by charging one or more monomers and solvent to a suitable reaction vessel, followed by the addition of the modifier and the initiator solution previously described. The procedure is carried out under anhydrous, anaerobic conditions. The reactants are heated to a temperature of from about -30° to 150°C. and are agitated for about 0.15 to 24 hours. After polymerization is complete, the polymer product is terminated in one or more ways. For example, a protic quenching agent may be employed to give a monofunctional polymer chain. Quenching may be conducted in water, steam or an alcohol such as isopropanol, or any other suitable method.

Alternatively, the polymer may be terminated with another reactive molecule to form a difunctional polymer. Examples would include tin tetrachloride; Michler's ketone; 1,3-dimethyl-2-imidazolidinone; 1-alkyl substituted pyrrolidones, 1-methyl-2-pyrrolidone, e.g., methyl, ethyl, propyl, butyl and the like; 1-aryl substituted pyrrolidones, e.g., phenyl, and the like; certain Schiff bases and the like.

Further examples of reactive molecules include the terminators described in U.S. Patent No. 5,066,729, the subject matter of which is incorporated by reference herein. It is to be understood that practice of the present invention is not limited solely to test terminators inasmuch as other compounds that are reactive with the polymer bound carbon-lithium moiety can be selected to provide a desired functional group. Furthermore, coupling agents may be used as displayed in the following examples including SnCl₄, dimethyl silicon dichloride, dihaloalkanes such as dibromoethane and dibromoxylene, esters such as methyl benzoate, phosphonitrilic chloride trimer and tetramer and the like to produce polymers that have functional groups X on both ends of the polymer chain to further reduce hysteresis in the subsequent compounded polymers.

Quenching is usually conducted by mixing the polymer and quenching agent for about 0.05 to about 2 hours at temperatures of from about 30° to 120° C. to insure complete reaction. Polymers terminated with a functional agent such as a Schiff base and the like, are subsequently quenched with alcohol or other quenching agent as described hereinabove.

Lastly, the solvent is removed from the polymer by drum drying, extruder drying, vacuum drying or the like, which may be combined with coagulation with water, alcohol or steam. If coagulation with water or steam is used, oven drying may be desirable.

The polymers of the present invention contain a functional group at the head or, if coupled, at both ends of the polymer chain rather than only at the terminal end of the chain. These functional groups have an affinity for compounding materials such as carbon black. Such compounding results in products exhibiting reduced hysteresis, which means a product having increased rebound, decreased rolling resistance and exhibiting reduced heat build-up when subjected to mechanical stress. The polymers of the present invention are useful for producing products including tires, power belts and the like. Decreased rolling resistance is, of course, a useful property for pneumatic tires, both radial as well as bias ply types and thus, the vulcanizable elastomeric compositions of the present invention can be utilized to form treadstocks, sidewalls, body plies and other parts for such tires.

The polymers of the present invention can be utilized as 100 parts of the rubber in the treadstock compound or, they can be blended with any conventionally employed treadstock rubber which includes natural rubber, synthetic rubber and blends thereof. When the polymers of the present invention are blended with conventional rubbers, the amounts can vary widely with a lower limit comprising about 10 to 20 percent by weight of the total rubber. It is to be appreciated that the minimum amount will depend primarily upon the degree of reduced hysteresis that is desired.

The polymers can be compounded with all forms of carbon black in amounts ranging from about 5 to 80 parts by weight, per 100 parts of rubber (phr), with about 35 to 60 phr being preferred. The reinforced rubber compounds can be cured in a conventional manner with known vulcanizing agents at about 0.1 to 10 phr. For a general disclosure of suitable vulcanizing agents one can refer to Kirk-Othmer, Encyclopedia of Chemical Technology, 3rd ed., Wiley Interscience, N.Y. 1982, Vol. 20, pp. 365 - 468, particularly "Vulcanization Agents and Auxiliary Materials" pp. 390 - 402. Vulcanizing agents can be used alone or in combination.

Vulcanizable elastomeric compositions of the invention can be prepared by compounding or mixing the functionalized polymers herein with carbon black and other conventional rubber additives such as fillers, plasticizers, antioxidants, curing agents and the like using standard rubber mixing equipment and procedures. Such elastomeric compositions when vulcanized using conventional rubber vulcanization conditions have reduced hysteresis properties and are particularly adapted for use as tread rubbers for tires having reduced rolling resistance.

In order to demonstrate the preparation and properties of elastomers prepared according to the present invention, in Examples 1 to 18 a functional initiator was prepared by treating a precursor functionalizing agent, formed by reacting equal molar amounts of diisopropenyl benzene and hexamethyleneimine to produce 2-(1-hexamethyleneimino)-propyl-3-isopropenyl benzene (HMIPB) with s-butyl lithium under an inert atmosphere. The initiator was then used to prepare a elastomer in solution and under an inert atmosphere. The termination reactions involved quenching with isopropanol or coupling with SnCl₄. As noted above, various techniques known in the art for carrying out polymerizations may be used with these initiators without departing from the scope of the present invention.

### EXAMPLE 1

A bake-dried, nitrogen purged one gallon stainless steel reactor was treated with a rinse of hexane containing 10 mmoles of n-butyl lithium and charged with 500 g of 1,3-butadiene and 2000 g of hexane. The functional initiator was prepared by reacting equal amounts of 2-(1-hexamethyleneimino)propyl-3-isopropenyl benzene (HMIPB) and s-butyl lithium at a one molar concentration in hexane for two hours at 25°C. and then diluting to 0.02 molar in hexane and heating at 65°C for 15 minutes. A charge of 4.5 mmoles of this functional initiator was added to the one gallon reactor and polymerization proceeded to completion at 50°C. for 4 hours. After polymerization was completed the reaction was quenched with isopropanol and the polymer was recovered by drum-drying. The recovered polybutadiene had a molecular weight of 140,700, a M_{w}/Mₙ of 1.31 and a microstructure containing 36.5% cis-1,4-units, 52.7% trans 1,4-units and 10.8% vinyl units.

### EXAMPLE 2

A one gallon reactor was prepared as in Example 1 and was charged with 100 g of styrene, 400 g. of 1,3-butadiene and 2000 g of hexane. HMIPB was reacted with an equivalent amount of s-butyl lithium at a 0.02 molar concentration in hexane for 15 minutes at 65°C. to form the functional initiator. The reactor was then charged with 4.5 mmoles of the functional initiator and 2.25 mmoles of 2,2-di(tetrahydrofuryl) propane as a randomizer and to increase the vinyl content of the butadiene monomer contributed units. The polymerization was conducted at 55°C. for two hours. The reaction was quenched with isopropanol and the SBR copolymer was recovered by drum-drying. The SBR copolymer had a molecular weight of 155,100, a M_{w}/Mₙ of 1.31, a vinyl content of 68.2% in the butadiene monomer contributed units and contained 21.9% by weight of styrene.

### EXAMPLE 3 (Comparative)

A control SBR copolymer was prepared in accordance with the procedure of Example 2, however the initiator consisted solely of 4.5 mmoles of n-butyl lithium. The recovered SBR copolymer had a molecular weight of 134,800, a M_{w}/Mₙ of 1.32, a 69.3% vinyl content in the butadiene monomer contributed units, and contained 22.2% by weight of styrene.

### EXAMPLES 4 TO 10

These examples display the preparation of SBR in a semibatch process. As identified in Table 1, a functional initiator was prepared by reacting displayed amounts of HMIPB with either s- or n-butyl lithium at 95°C for 10 to 15 minutes in hexane at a 0.10 molar solution. Additionally, each catalyst system employed 0.25 mmoles of 2,2-di(tetrahydrofuryl) propane as a randomizer and to increase the vinyl content of the butadiene contributed units, except Example 6 employed only 0.2 mmoles of randomizer.

In each of Examples 4 to 10, a steel reactor was charged with the amounts of functionalized initiator as prepared in 0.1 molar concentrations in hexane in the reactive amounts identified in Table 1 and with the modifier.

A blend of 65% 1,3-butadiene/35% styrene in hexane was metered into the reactor for 90 to 105 minutes at 90° to 100°C. and polymerized. Polymerization was terminated with isopropanol (i-PrOH) or a SnCl₄ coupling agent and the copolymers were recovered by drum drying. The properties of the recovered styrene-butadiene copolymers are displayed in Table 1. Polymer analyses were conducted by GPC to provide molecular weight values and by NMR to provide amounts of 1,2-content of the diene units expressed as a percent, as well as the percent of bound styrene and styrene block. Additionally the recovered copolymers, Examples 6 and 10 displayed coupling of 40% and 66%, respectively. Example 4 was a control characterizing conventional anionic polymerization.

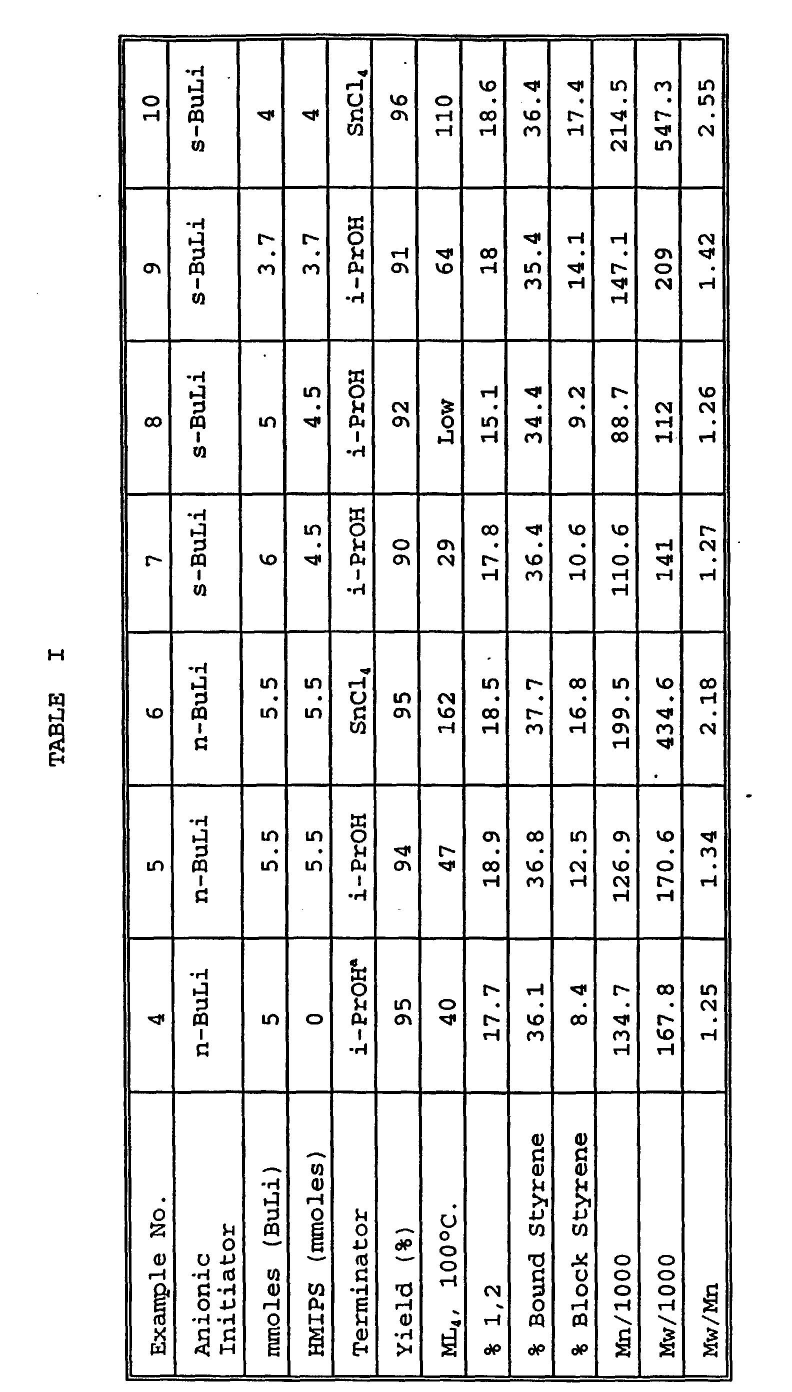

### EXAMPLE 11 (Comparative)

A semibatch polymerization was run in accordance with the procedures of Examples 4 to 10, employing an anionic initiator system of a 50/50 mixture of lithium pyrrolidinide and lithium hexamethyleneimide. The polymerization died out achieving only 65% conversion of monomer.

### EXAMPLES 12 AND 13

The recovered polybutadiene polymer from Example 1 was compounded with 50 pbw of carbon black and 10 pbw of naphthenic oil plus standard sulfur curatives and the vulcanized compound displayed a tan δ at 50°C. of 0.093 as Example 12.

A polymer was produced in accordance with the procedure of Example 1, however the functional initiator was replaced with s-butyl lithium. The recovered control polybutadiene polymer was compounded with 50 pbw of carbon black and 10 pbw of naphthenic oil and standard sulfur curatives as in Example 13. The original polybutadiene possessed the following properties: 10% vinyl content, Mₙ of 94,200, M_{w}/Mₙ of 1.23; and the recovered vulcanizate displayed a tan δ at 50°C. of 0.186.

### EXAMPLES 14 AND 15

The styrene-butadiene copolymers prepared in Examples 2 and 3 were each compounded with 50 pbw of carbon black and 10 pbw of naphthenic oil and sulfur cured. The compounded styrene-butadiene copolymer of Example 2 displayed a tan δ at 50°C. of 0.128 as Example 14. The compounded styrene-butadiene copolymer of Example 3 displayed a tan δ at 50°C. of 0.230 as Example 15.

### EXAMPLES 16 TO 18

Recovered semibatch styrene-butadiene copolymers were compounded with 15 pbw of naphthenic oil per hundred parts by weight of copolymer and 48.5 pbw of carbon black. The copolymer employed in Example 16 was the recovered SBR copolymer of Example 4. The copolymer employed in Example 17 was the recovered SBR copolymer of Example 7. The copolymer employed in Example 18 was the recovered SBR copolymer of Example 6. The tan δ at 50°C. for Example 16, containing the copolymer of Example 4, the control, was 0.179 and the compound ML₄ at 100°C. was 61. The tan δ at 50°C and compound ML₄ at 100°C. for Examples 17 was 0.127 and 60, respectively, and for Example 18 was 0.108 and 87, respectively.

Inasmuch as a lower tan δ value indicates improved hysteresis, it is readily noted that Examples 17 and 18, containing the copolymers of Examples 7 and 6, respectively, prepared with an initiator of the present invention showed a most favorable improvement in hysteresis over the control polymer of Example 16.

In conclusion, it should be clear from the foregoing examples and specification disclosure that the initiators of the present invention are useful for the anionic polymerization of diene monomers to form homopolymers as well as copolymers with monovinyl aromatic polymers or trienes. The resulting elastomeric polymers have a functional group at the site of initiation and a lithium atom at the terminal, "living" end. After quenching, the polymers still retain the functional group at the site of initiation, which promotes uniform and homogeneous mixing with carbon black. As a result vulcanizable elastomeric compounds containing these polymers exhibit improved hysteresis which provides lower rolling resistance in tires and improved fuel economy. Additionally, the lithium terminated polymers can be quenched with compounds to provide terminal functional groups and hence, difunctional polymer chains.

### Examples 19 to 23

In the following examples, styrene butadiene rubber compositions were prepared utilizing in situ dispersion polymerization techniques disclosed in Examples 3 to 12 in U.S. patent no. 5,331,035.

Example 19 is a comparative example and utilized a n-butyllithium initiator. Example 20 utilized an initiator (PYRPB) formed by a 1:1 molar ratio of (a) n-butyllithium and (b) the reaction product of equimolar amounts of pyrrolidine and diisopropenylbenzene. Example 21 utilized an initiator (PIPPB) formed by a 1:1 molar ratio of (a) n-butyllithium and (b) the reaction product of equimolar amounts of piperidine and diisopropenylbenzene. Example 22 utilized an initiator (HMIPB) formed by a 1:1 molar ratio of (a) n-butyllithium and (b) the reaction product of equimolar amounts of hexamethyleneimine and diisopropenylbenzene. Example 23 utilized an initiator formed by a 1:1 ratio of (a) n-butyllithium and (b) the reaction product of equimolar amounts of diethylamine and diisopropenylbenzene. Table 2 displays the properties of the recovered styrene-butadiene rubber (SBR) polymers as well as the vulcanizate properties of these SBR polymers after compounding with 48.5 parts by weight of carbon black and 15 parts by weight of naphthenic oil per 100 parts of rubber and curing with sulfur.

It is to be understood that the invention is not limited to the specific precursor functionalizing agents and organolithium compounds disclosed nor to any particular modifier or solvent. Similarly, the examples have been provided merely to demonstrate practice of the subject invention.

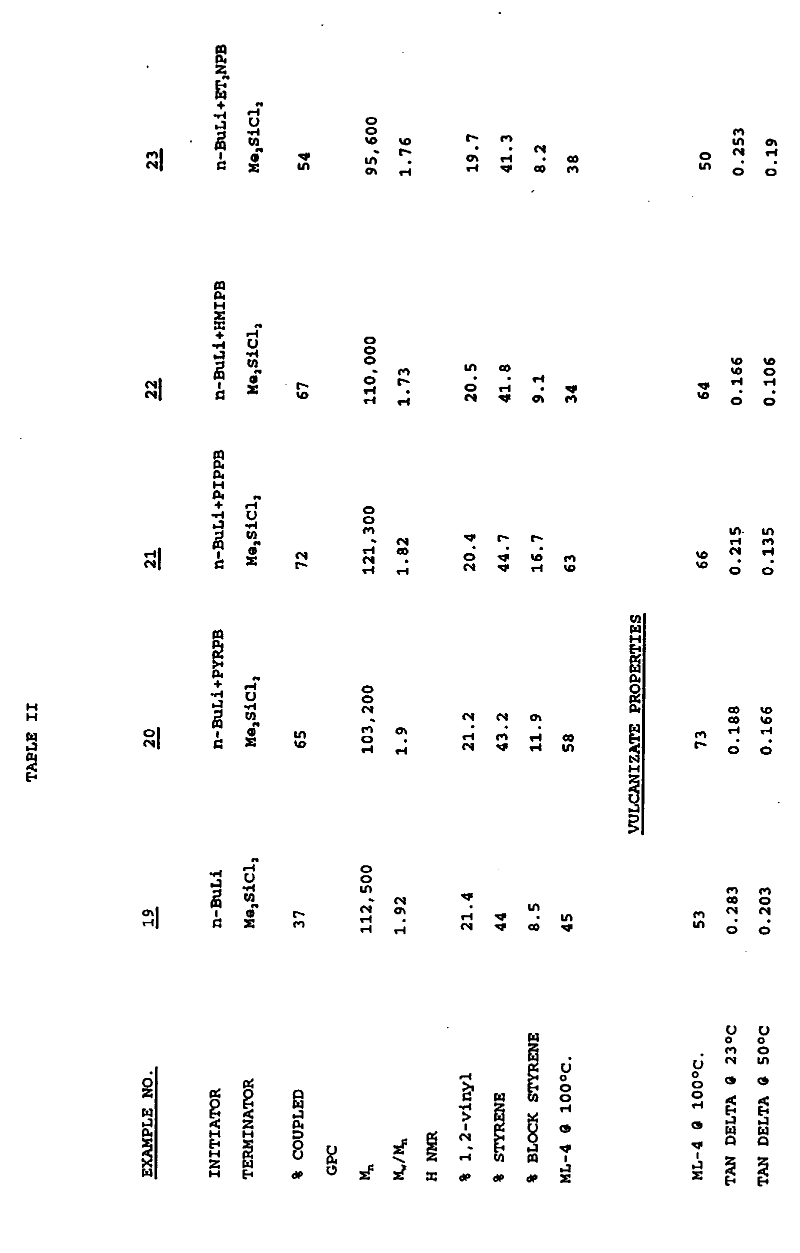

## Claims

1. A method of preparing polymers having reduced hysteresis comprising polymerizing 30 to 100 percent by weight of a diene monomer and 0 to 70 percent by weight of a vinyl aromatic hydrocarbon monomer in an aprotic solvent in the presence of a catalytically effective amount of an anionic initiator, wherein the anionic initiator is prepared by reacting: (1) an organolithium compound with (2) a precursor functionalizing agent formed by reacting (a) a diisopropenyl benzene having the formula: 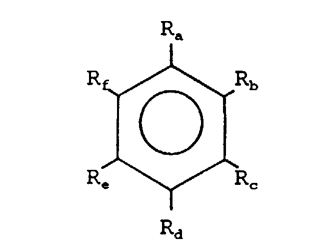 wherein two of the Rₐ - R_{f} radicals are isopropenyl and the remaining Rₐ - R_{f} radicals are independently selected from the group consisting of hydrogen, alkyl and cycloalkyl containing 1 to 6 carbon atoms, with (b) a heterocyclic ring compound containing a nitrogen atom of a secondary amine as a ring atom and the ring being essentially free of substituents or unsubstituted ring atoms that are reactive with lithium or alkylene groups.

2. The method of claim 1 in which the heterocyclic ring compound comprises: 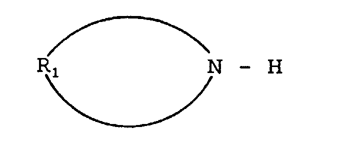 wherein R₁ represents 3 to about 20 ring methylene groups and each of the methylene groups being independently unsubstituted or substituted with substituents that are non-reactive with lithium or diisopropenyl benzene.

3. The method of claim 2 wherein each of the methylene groups in R₁ is independently unsubstituted or substituted with one or more substituents selected from the group comprising alkyl, cycloalkyl, aryl, alkoxy, arylalkyl, and alkoxyalkyl groups.

4. The method of claim 1 wherein the heterocyclic ring compound is selected from the group consisting of: piperidine, pyrrolidine, hexamethyleneimine, dodecamethyleneimine, morpholine thiomorpholine, N-methyl-piperazine, N-aryl-piperazine, 1-(2-pyridyl)-piperazine, pyrrole, 3-pyrroline, pyrazole, imidazole, indole, indoline and purine.

5. The method of claim 4 wherein the heterocyclic ring compound is substituted with one or more substituents selected from the group comprising alkyl, cycloalkyl, aryl, alkoxy, arylalkyl, and alkoxyalkyl groups.

6. An elastomer comprised of 30 to 100 percent by weight of diene monomer contributed units and 0 to 70 percent by weight by vinyl aromatic monomer contributed units and the elastomer contains an end group represented by the formula: 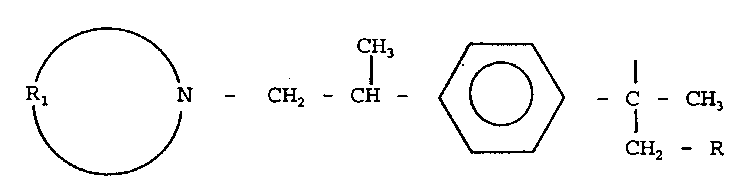 wherein R₁-N represents a heterocyclic ring containing a nitrogen atom of a secondary amine as a ring atom and the ring being essentially free of substituents or unsubstituted ring atoms that are reactive with lithium or alkylene groups, and R is selected from the group consisting of alkyl, cycloalkyl, alkenyl, alkynyl, aryl and aralkyl having from 1 to about 20 carbon atoms and short chain length low molecular weight polymers from diolefin and vinyl aryl monomers having up to about 25 units.

7. The elastomer of claim 6 wherein the heterocyclic ring compound comprises: 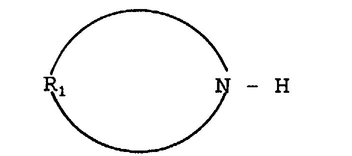 wherein R₁ represents 3 to about 20 ring methylene groups and each of the methylene groups being independently unsubstituted or substituted with substituents that are non-reactive with lithium or diisopropenyl benzene.

8. The elastomer of claim 7 wherein each of the methylene groups in R₁ is independently unsubstituted or substituted with one or more substituents selected from the group comprising alkyl, cycloalkyl, aryl, alkoxy, arylalkyl, and alkoxyalkyl groups.

9. The elastomer of claim 6 wherein the heterocyclic ring compound is selected from the group consisting of: piperidine, pyrrolidine, hexamethyleneimine, dodecamethyleneimine, morpholine thiomorpholine, N-methyl-piperazine, N-aryl-piperazine, 1-(2-pyridyl)-piperazine, pyrrole, 3-pyrroline, pyrazole, imidazole, indole, indoline and purine.

10. The elastomer of claim 9 wherein the heterocyclic ring compound is substituted with one or more substituents selected from the group comprising alkyl, cycloalkyl, aryl, alkoxy, arylalkyl, and alkoxyalkyl groups.

11. The elastomer of claim 6 additionally comprising 5 to 80 parts by weight of carbon black per 100 parts by weight of elastomer.

12. The elastomer of claim 6 additionally comprising 0.1 to 10 phr of a vulcanizing agent.

13. A tire, a treadstock, a sidewall or a tire body ply comprising the elastomer of claim 6.

14. A power belt comprising the elastomer of claim 6.

15. A method of preparing a polymer having reduced hysteresis comprising polymerizing 30 to 100 percent by weight of a diene monomer and 0 to 70 percent by weight of a vinyl aromatic hydrocarbon monomer in an aprotic solvent in the presence of a catalytically effective amount of an anionic initiator, wherein the anionic initiator is prepared by reacting (1) an organolithium compound with (2) a precursor functionalizing agent prepared by reacting (a) a diisopropenyl benzene having the formula: 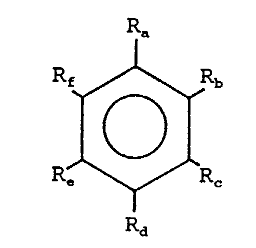 wherein two of the Rₐ - R_{f} radicals are isopropenyl and the remaining Rₐ - R_{f} radicals are independently selected from the group consisting of hydrogen, alkyl and cycloalkyl containing 1 to 6 carbon atoms, with (b) a heterocyclic ring compound selected from the group consisting of azacycloalkanes containing from 3 to 20 ring methylene groups, morpholine, thiomorpholine, N-lower alkylpiperazine, N-aryl-piperazne, 1-2(pyridyl)-piperazine, pyrrole, 3-pyrroline, pyrazole, imidazole, indole, indoline and purine, the heterocyclic ring being essentially free of substituents or unsubstituted ring atoms that are reactive with lithium or alkylene groups.

16. The method of claim 15 wherein the organolithium compound comprises the general formula RLi wherein R is selected from the group consisting of alkyl, cycloalkyl, alkenyl, alkynyl, aryl and aralkyl having from 1 to about 20 carbon atoms and short chain length low molecular weight polymers from diolefin and vinyl aryl monomers having up to about 25 units.

17. The method of claim 15 wherein the precursor functionalizing agent is formed by reacting hexamethyleneimine and diisopropenyl benzene.

18. The method of claim 15 wherein the heterocyclic ring compound is selected from the group consisting of piperidine, pyrrolidine, hexamethyleneimine and dodecamethyleneimine.

19. The method of claim 18 wherein the heterocyclic ring compound is substituted with one or more substituents selected from the group comprising alkyl, cycloalkyl, aryl, alkoxy, arylalkyl, and alkoxyalkyl groups.

20. The method of claim 15 wherein the step of forming the precursor functionalizing agent includes the step of reacting the diisopropenyl benzene and the heterocyclic ring compound in a ratio ranging from at least 1 to 1.

21. The method of claim 15 wherein the step of reacting the diisopropenyl benzene and the precursor functionalizing agent includes a step of forming a solution comprising from about 0.2 to 3.0 mmoles of the precursor functionalizing agent per 1 mmole of the organolithium compound in an anhydrous aprotic solvent.

22. The method of claim 15 wherein the polymer comprises polybutadiene.

23. The method of claim 15 wherein the polymer comprises styrene butadiene rubber.

24. The method of claim 15 wherein the polymerization is a semi-batch or a continuous polymerization.

25. A polymer selected from the group consisting of polyethylene and polystyrene, the polymer containing an end group represented by the formula: 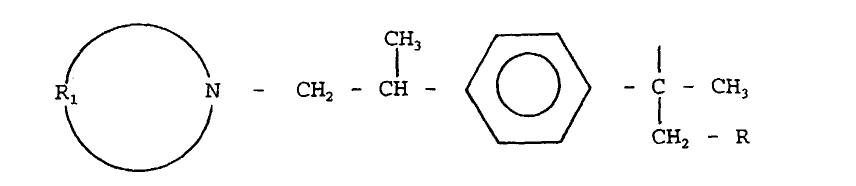 wherein R₁-N represents a heterocyclic ring containing a nitrogen atom of a secondary amine as a ring atom and the ring being essentially free of substituents or unsubstituted ring atoms that are reactive with lithium, or alkylene groups, and R is selected from the group consisting of alkyl, cycloalkyl, alkenyl, alkynyl, aryl and aralkyl having from 1 to about 20 carbon atoms and short chain length low molecular weight polymers from diolefin and vinyl aryl monomers having up to about 25 units.

## Patentansprüche

1. Verfahren zur Herstellung von Polymeren mit verminderter Hysterese, umfassend die Polymerisation von 30 bis 100 Gew.-% eines Dienmonomeren mit 0 bis 70 Gew.-% eines vinylaromatischen Kohlenwasserstoffmonomeren in einem aprotischen Lösungsmittel in Gegenwart einer katalytisch wirksamen Menge eines anionischen Initiators, wobei der anionische Initiator durch Umsetzung von (1) einer Organolithiumverbindung mit (2) einem Vorläufer-Funktionalisierungsmittel, gebildet durch Umsetzung (a) eines Diisopropenylbenzols mit der Formel: 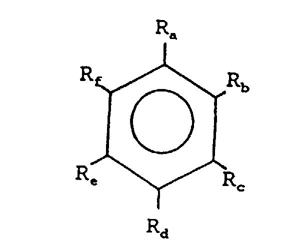 worin zwei der Reste Rₐ bis R_{f} Isopropenyl sind und die restlichen Reste Rₐ bis R_{f} Reste sind, die unabhängig voneinander aus der Gruppe, bestehend aus Wasserstoff, Alkyl und Cycloalkyl mit 1 bis 6 Kohlenstoffatomen, mit (b) einer heterocyclischen Ringverbindung, enthaltend ein Stickstoffatom eines sekundären Amins als ein Ringatom, wobei der Ring im wesentlichen von Substituenten oder unsubstituierten Ringatomen frei ist, die gegenüber Lithium- oder Alkylengruppen reaktiv sind, hergestellt wird.

2. Verfahren nach Anspruch 1, dadurch **gekennzeichnet**, daß die heterocvclische Ringverbindung 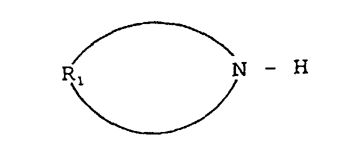 umfaßt, worin R₁ für 3 bis etwa 20 Ringmethylengruppen steht und jede der Methylengruppen unabhängig unsubstituiert ist oder mit Substituenten, die gegenüber Lithium oder Diisopropenylbenzol nicht reaktiv sind, substituiert ist.

3. Verfahren nach Anspruch 2, dadurch **gekennzeichnet**, daß jede der Methylengruppen in R₁ unabhängig unsubstituiert ist oder mit einem oder mehreren Substituenten, ausgewählt aus der Gruppe, umfassend Alkyl-, Cycloalkyl-, Aryl-, Alkoxy-, Arylalkyl- und Alkoxyalkylgruppen, substituiert ist.

4. Verfahren nach Anspruch 1, dadurch **gekennzeichnet**, daß die heterocyclische Ringverbindung aus der Gruppe, bestehend aus Piperidin, Pyrrolidin, Hexamethylenimin, Dodecamethylenimin, Morpholinthiomorpholin, N-Methylpiperazin, N-Arylpiperazin, 1-(2-Pyridyl)-piperazin, Pyrrol, 3-Pyrrolin, Pyrazol, Imidazol, Indol, Indolin und Purin, ausgewählt ist.

5. Verfahren nach Anspruch 4, dadurch **gekennzeichnet**, daß die heterocyclische Ringverbindung mit einem oder mehreren Substituenten, ausgewählt aus der Gruppe, umfassend Alkyl-, Cycloalkyl-, Aryl-, Alkoxy-, Arylalkyl- und Alkoxyalkylgruppen, substituiert ist.

6. Elastomeres, umfassend 30 bis 100 Gew.-% von einem Dienmonomeren herrührende Einheiten und 0 bis 70 Gew.-% von einem vinylaromatischen Monomeren herrührende Einheiten, wobei das Elastomere eine Endgruppe der Formel 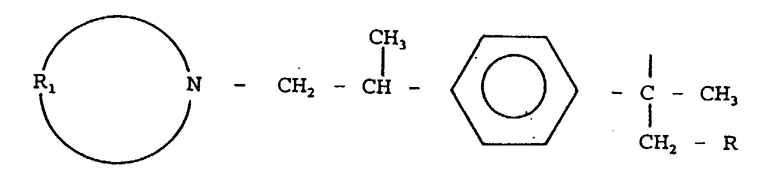 enthält, worin R₁-N für einen heterocyclischen Ring steht, der ein Stickstoffatom eines sekundären Amins als Ringatom enthält, und der Ring im wesentlichen von Substituenten oder unsubstituierten Ringatomen frei ist, die gegenüber Lithium- oder Alkylengruppen reaktiv sind, und R aus der Gruppe, bestehend aus Alkyl, Cycloalkyl, Alkenyl, Alkynyl, Aryl und Aralkyl mit 1 bis etwa 20 Kohlenstoffatomen und kurzkettigen Polymeren mit niederem Molekulargewicht von Diolefin- und Vinylarylmonomeren mit bis zu etwa 25 Einheiten, ausgewählt ist.

7. Elastomeres nach Anspruch 6, dadurch **gekennzeichnet,** daß die heterocyclische Ringverbindung 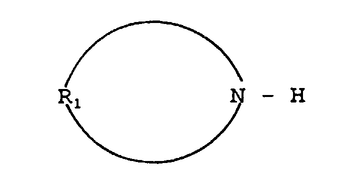 umfaßt, worin R₁ für 3 bis etwa 20 Ringmethylengruppen steht und jede der Methylengruppen unabhängig unsubstituiert oder mit Substituenten, die gegenüber Lithium oder Diisopropenylbenzol nicht reaktiv sind, substituiert ist.

8. Elastomeres nach Anspruch 7, dadurch **gekennzeichnet,** daß jede der Methylengruppen in R₁ unabhängig unsubstituiert ist oder mit einem oder mehreren Substituenten, ausgewählt aus der Gruppe, umfassend Alkyl-, Cycloalkyl-, Aryl-, Alkoxy-, Arylalkyl- und Alkoxyalkylgruppen, substituiert ist.

9. Elastomeres nach Anspruch 6, dadurch **gekennzeichnet,** daß die heterocyclische Ringverbindung aus der Gruppe, bestehend aus Piperidin, Pyrrolidin, Hexamethylenimin, Dodecamethylenimin, Morpholinthiomorpholin, N-Methylpiperazin, N-Arylpiperazin, 1-(2-Pyridyl)-piperazin, Pyrrol, 3-Pyrrolin, Pyrazol, Imidazol, Indol, Indolin und Purin, ausgewählt ist.

10. Elastomeres nach Anspruch 9, dadurch **gekennzeichnet**, daß die heterocyclische Ringverbindung mit einem oder mehreren Substituenten, ausgewählt aus der Gruppe, bestehend aus Alkyl-, Cycloalkyl-, Aryl-, Alkoxy-, Arylalkyl- und Alkoxyalkylgruppen, substituiert ist.

11. Elastomeres nach Anspruch 6, dadurch **gekennzeichnet,** daß es zusätzlich 5 bis 80 Gew.-Teile Ruß je 100 Gew.-Teile Elastomeres enthält.

12. Elastomeres nach Anspruch 6, dadurch **gekennzeichnet,** daß es zusätzlich 0,1 bis 10 phr eines Vulkanisationsmittels enthält.

13. Reifen, Laufflächenmasse, Seitenteil oder Reifenmantelschicht, umfassend das Elastomere nach Anspruch 6.

14. Treibriemen, umfassend das Elastomere nach Anspruch 6.

15. Verfahren zur Herstellung eines Polymeren mit verminderter Hysterese, umfassend die Polymerisation von 30 bis 100 Gew.-% eines Dienmonomeren mit 0 bis 70 Gew.-% eines vinylaromatischen Kohlenwasserstoffmonomeren in einem aprotischen Lösungsmittel in Gegenwart einer katalytisch wirksamen Menge eines anionischen Initiators, wobei der anionische Initiator durch Umsetzung von (1) einer Organolithiumverbindung mit (2) einem Vorläufer-Funktionalisierungsmittel, gebildet durch Umsetzung (a) eines Diisopropenylbenzols mit der Formel: 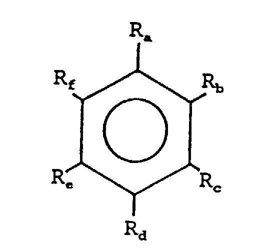 worin zwei der Reste Rₐ bis R_{f} Isopropenyl sind und die restlichen Reste Rₐ bis R_{f} Reste sind, die unabhängig voneinander aus der Gruppe, bestehend aus Wasserstoff, Alkyl und Cycloalkyl mit 1 bis 6 Kohlenstoffatomen, mit (b) einer heterocyclischen Ringverbindung, ausgewählt aus der Gruppe, bestehend aus Azacycloalkanen mit 3 bis 20 Ringmethylengruppen, Morpholin, Thiomorpholin, N-Niedrigalkylpiperazin, N-Arylpiperazin, 1-2(Pyridyl)-piperazin, Pyrrol, 3-Pyrrolin, Pyrazol, Imidazol, Indol, Indolin und Purin, wobei der heterocyclische Ring im wesentlichen von Substituenten oder unsubstituierten Ringatomen frei ist, die gegenüber Lithium- oder Alkylengruppen reaktiv sind, hergestellt wird.

16. Verfahren nach Anspruch 15, dadurch **gekennzeichnet,** daß die Organolithiumverbindung durch die allgemeine Formel RLi angegeben wird, in der R aus der Gruppe, bestehend aus Alkyl, Cycloalkyl, Alkenyl, Alkynyl, Aryl und Aralkyl mit 1 bis etwa 20 Kohlenstoffatomen und kurzkettigen Polymeren mit niederem Molekulargewicht aus Diolefin- und Vinylarylmonomeren mit bis zu etwa 25 Einheiten, ausgewählt ist.

17. Verfahren nach Anspruch 15, dadurch **gekennzeichnet,** daß das Vorläufer-Funktionalisierungsmittel durch Umsetzung von Hexamethylenimin und Diisopropenylbenzol gebildet worden ist.

18. Verfahren nach Anspruch 15, dadurch **gekennzeichnet,** daß die heterocyclische Ringverbindung aus der Gruppe, bestehend aus Piperidin, Pyrrolidin, Hexamethylenimin und Dodecamethylenimin, ausgewählt wird.

19. Verfahren nach Anspruch 18, dadurch **gekennzeichnet,** daß die heterocyclische Ringverbindung mit einem oder mehreren Substituenten, ausgewählt aus der Gruppe, umfassend Alkyl-, Cycloalkyl-, Aryl-, Alkoxy-, Arylalkyl- und Alkoxyalkylgruppen, substituiert ist.

20. Verfahren nach Anspruch 15, dadurch **gekennzeichnet,** daß die Stufe der Bildung des VorläuferFunktionalisierungsmittels die Stufe der Umsetzung von Diisopropenylbenzol und der heterocyclischen Ringverbindung in einem Verhältnis von mindestens 1:1 einschließt.

21. Verfahren nach Anspruch 15, dadurch **gekennzeichnet,** daß die Stufe der Umsetzung von Diisopropenylbenzol mit dem Vorläufer-Funktionalisierungsmittel eine Stufe der Bildung einer Lösung, enthaltend etwa 0,2 bis 3,0 mmol Vorläufer-Funktionalisierungsmittel pro 1 mmol Organolithiumverbindung in einem wasserfreien aprotischen Lösungsmittel, einschließt.

22. Verfahren nach Anspruch 15, dadurch **gekennzeichnet,** daß das Polymere Polybutadien umfaßt.

23. Verfahren nach Anspruch 15, dadurch **gekennzeichnet,** daß das Polymere Styrolbutadienkautschuk umfaßt.

24. Verfahren nach Anspruch 15, dadurch **gekennzeichnet,** daß die Polymerisation eine halb-ansatzweise geführte oder eine kontinuierliche Polymerisation ist.

25. Polymeres, ausgewählt aus der Gruppe, bestehend aus Polyethylen und Polystyrol, wobei das Polymere eine Endgruppe der Formel 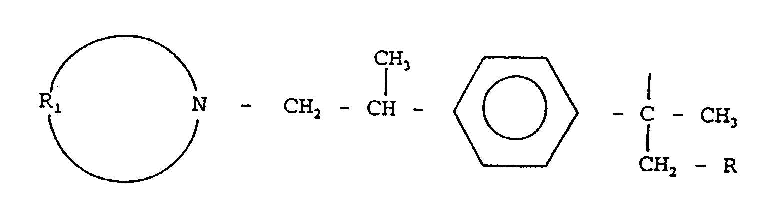 umfaßt, worin R₁-N für einen heterocyclischen Ring, enthaltend ein Stickstoffatom eines sekundären Amins als Ringatom steht, und der Ring im wesentlichen von Substituenten oder unsubstituierten Ringatomen frei ist, die gegenüber Lithium- oder Alkylengruppen reaktiv sind, und R aus der Gruppe, bestehend aus Alkyl, Cycloalkyl, Alkenyl, Alkynyl, Aryl und Aralkyl mit 1 bis etwa 20 Kohlenstoffatomen und kurzkettigen Polymeren mit niederem Molekulargewicht aus Diolefin- und Vinylarylmonomeren mit bis zu etwa 25 Einheiten, ausgewählt ist.

## Revendications

1. Procédé pour la préparation de polymères à hystérésis réduite, comprenant la polymérisation de 30 à 100 % en poids d'un monomère diénique et de 0 à 70 % en poids d'un monomère hydrocarboné aromatique vinylique dans un solvant aprotique en présence d'une quantité catalytiquement efficace d'un initiateur anionique, dans lequel l'initiateur anionique est préparé en faisant réagir : (1) un composé organique de lithium avec (2) un agent de fonctionnalisation précurseur formé en faisant réagir (a) un diisopropénylbenzène répondant à la formule : 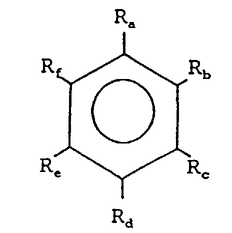 dans laquelle deux des radicaux Rₐ à R_{f} sont des radicaux isopropényle et les radicaux Rₐ à R_{f} restants sont choisis, indépendamment, dans le groupe consistant en l'hydrogène, des radicaux alkyle et cycloalkyle contenant 1 à 6 atomes de carbone, avec (b) un composé à noyau hétérocyclique contenant un atome d'azote d'une amine secondaire comme atome de noyau, noyau qui est pratiquement dépourvu de substituants ou d'atomes de noyau non substitués qui sont réactifs avec le lithium ou des groupes alkylène.

2. Procédé suivant la revendication 1, dans lequel le composé à noyau hétérocyclique comprend : 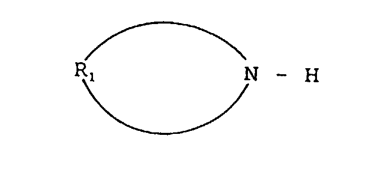 formule dans laquelle R₁ représente 3 à environ 20 groupes méthylène de noyau, chacun des groupes méthylène étant indépendamment non substitué ou substitué avec des substituants qui sont non réactifs avec le lithium ou le diisopropénylbenzène.

3. Procédé suivant la revendication 2, dans lequel chacun des groupes méthylène dans R₁ est indépendamment non substitué ou substitué avec un ou plusieurs substituants choisis dans le groupe comprenant des groupes alkyle, cycloalkyle, aryle, alkoxy, arylalkyle et alkoxyalkyle.

4. Procédé suivant la revendication 1, dans lequel le composé à noyau hétérocyclique est choisi dans le groupe consistant en : pipéridine, pyrrolidine, hexaméthylène-imine, dodécaméthylène-imine, morpholine, thiomorpholine, N-méthylpipérazine, N-arylpipérazine, 1-(2-pyridyl)-pipérazine, pyrrole, 3-pyrroline, pyrazole, imidazole, indole, indoline et purine.

5. Procédé suivant la revendication 4, dans lequel le composé à noyau hétérocyclique est substitué avec un ou plusieurs substituants choisis dans le groupe comprenant des groupes alkyle, cycloalkyle, aryle, alkoxy, arylalkyle et alkoxyalkyle.

6. Elastomère constitué de 30 à 100 % en poids de motifs fournis par un monomère diénique et de 0 à 70 % en poids de motifs fournis par un monomère aromatique vinylique, élastomère qui contient un groupe terminal représenté par la formule : 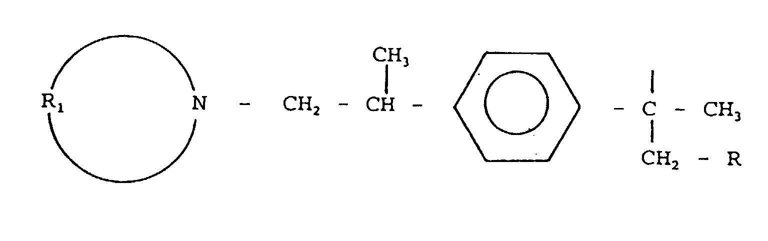 dans laquelle R₁-N représente un noyau hétérocyclique contenant un atome d'azote d'une amine secondaire comme atome de noyau, noyau qui est pratiquement dépourvu de substituants ou d'atomes de noyau non substitués qui sont réactifs avec le lithium ou des groupes alkylène, et R est choisi dans le groupe consistant en groupes alkyle, cycloalkyle, alcényle, alcynyle, aryle et aralkyle ayant 1 à environ 20 atomes de carbone et des polymères, de courte longueur de chaîne et de bas poids moléculaire, de monomères dioléfiniques et monomères vinyl-aryliques, ayant jusqu'à environ 25 motifs.

7. Elastomère suivant la revendication 6, dans lequel le composé à noyau hétérocyclique comprend : 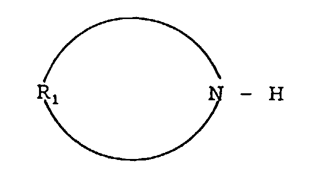 formule dans laquelle R₁ représente 3 à environ 20 groupes méthylène de noyau, chacun des groupes méthylène étant indépendamment non substitué ou substitué avec des substituants qui sont non réactifs avec le lithium ou le diisopropénylbenzène.

8. Elastomère suivant la revendication 7, dans lequel chacun des groupes méthylène dans R₁ est indépendamment non substitué ou substitué avec un ou plusieurs substituants choisis dans le groupe comprenant des groupes alkyle, cycloalkyle, aryle, alkoxy, arylalkyle et alkoxyalkyle.

9. Elastomère suivant la revendication 6, dans lequel le composé à noyau hétérocyclique est choisi dans le groupe consistant en : pipéridine, pyrrolidine, hexaméthylène-imine, dodécaméthylène-imine, morpholine, thiomorpholine, N-méthylpipérazine, N-arylpipérazine, 1-(2-pyridyl)-pipérazine, pyrrole, 3-pyrroline, pyrazole, imidazole, indole, indoline et purine.

10. Elastomère suivant la revendication 9, dans lequel le composé à noyau hétérocyclique est substitué avec un ou plusieurs substituants choisis dans le groupe comprenant des groupes alkyle, cycloalkyle, aryle, alkoxy, arylalkyle et alkoxyalkyle.

11. Elastomère suivant la revendication 6, comprenant en outre 5 à 80 parties en poids de noir de carbone pour 100 parties en poids d'élastomère.

12. Elastomère suivant la revendication 6, comprenant en outre 0,1 à 10 pcc d'un agent vulcanisant.

13. Bandage pneumatique, bande de roulement, flanc ou couche pour corps de bandage pneumatique comprenant l'élastomère suivant la revendication 6.

14. Courroie de transmission de puissance, comprenant l'élastomère suivant la revendication 6.

15. Procédé pour la préparation d'un polymère présentant une hystérésis réduite, comprenant la polymérisation de 30 à 100 % en poids d'un monomère diénique et de 0 à 70 % en poids d'un monomère hydrocarboné aromatique vinylique dans un solvant aprotique en présence d'une quantité catalytiquement efficace d'un initiateur anionique, dans lequel l'initiateur anionique est préparé en faisant réagir (1) un composé organique de lithium avec (2) un agent de fonctionnalisation précurseur préparé en faisant réagir (a) un diisopropylbenzène répondant à la formule : 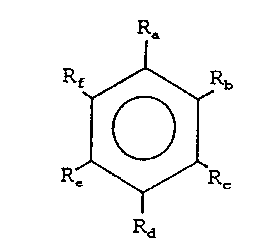 dans laquelle deux des radicaux Rₐ à R_{f} représentent des radicaux isopropényle et les radicaux Rₐ à R_{f} restants sont choisis, indépendamment, dans le groupe consistant en l'hydrogène, des radicaux alkyle et cycloalkyle contenant 1 à 6 atomes de carbone, avec (b) un composé à noyau hétérocyclique choisi dans le groupe consistant en azacycloalcanes contenant 3 à 20 groupes méthylène de noyau, morpholine, thiomorpholine, N-(alkyle inférieur)-pipérazine, N-arylpipérazine, 1-(2-pyridyl)-pipérazine, pyrrole, 3-pyrroline, pyrazole, imidazole, indole, indoline et purine, le noyau hétérocyclique étant pratiquement dépourvu de substituants ou d'atomes de noyau non substitués qui sont réactifs avec le lithium ou des groupes alkylène.

16. Procédé suivant la revendication 15, dans lequel le composé organique de lithium comprend la formule générale RLi dans laquelle R est choisi dans le groupe consistant en groupes alkyle, cycloalkyle, alcényle, alcynyle, aryle et aralkyle ayant 1 à environ 20 atomes de carbone et des polymères, de courte longueur de chaîne et de bas poids moléculaire, de monomères dioléfiniques et monomères vinyl-aryliques, comprenant jusqu'à environ 25 motifs.

17. Procédé suivant la revendication 15, dans lequel l'agent de fonctionnalisation précurseur est formé en faisant réagir de l'hexaméthylène-imine et du diisopropénylbenzène.

18. Procédé suivant la revendication 15, dans lequel le composé à noyau hétérocyclique est choisi dans le groupe consistant en pipéridine, pyrrolidine, hexaméthylèneimine et dodécaméthylène-imine.

19. Procédé suivant la revendication 18, dans lequel le composé à noyau hétérocyclique est substitué avec un ou plusieurs substituants choisis dans le groupe comprenant des groupes alkyle, cycloalkyle, aryle, alkoxy, arylalkyle et alkoxyalkyle.

20. Procédé suivant la revendication 15, dans lequel l'étape de formation de l'agent de fonctionnalisation précurseur comprend l'étape consistant à faire réagir le diisopropénylbenzène et le composé à noyau hétérocyclique en un rapport allant d'au moins 1 à 1.

21. Procédé suivant la revendication 15, dans lequel l'étape de réaction du diisopropénylbenzène et de l'agent de fonctionnalisation précurseur comprend une étape consistant à former une solution comprenant environ 0,2 à 3,0 mmoles de l'agent de fonctionnalisation précurseur pour 1 mmole du composé organique de lithium dans un solvant aprotique anhydre.

22. Procédé suivant la revendication 15, dans lequel le polymère comprend le polybutadiène.

23. Procédé suivant la revendication 15, dans lequel le polymère comprend le caoutchouc styrène-butadiène.

24. Procédé suivant la revendication 15, dans lequel la polymérisation est une polymérisation semi-continue ou continue.

25. Polymère choisi dans le groupe consistant en polyéthylène et polystyrène, polymère qui contient un groupe terminal représenté par la formule : 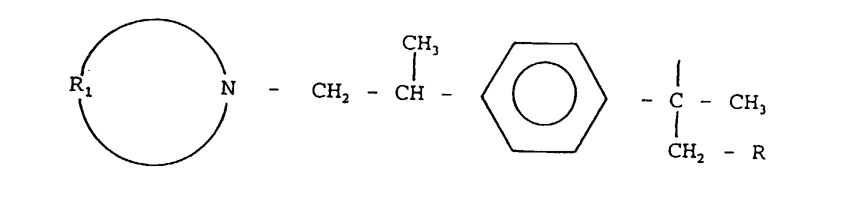 dans laquelle R₁-N représente un noyau hétérocyclique contenant un atome d'azote d'une amine secondaire comme atome de noyau, noyau qui est pratiquement dépourvu de substituants ou d'atomes de noyau non substitués qui sont réactifs avec le lithium ou des groupes alkylène, et R est choisi dans le groupe consistant en groupes alkyle, cycloalkyle, alcényle, alcynyle, aryle et aralkyle ayant 1 à environ 20 atomes de carbone et des polymères, de courte longueur de chaîne et de bas poids moléculaire, de monomères dioléfiniques et monomères vinyl-aryliques, comprenant jusqu'à environ 25 motifs.
